# FASCICULE DE BREVET EUROPEEN

(11) **EP 0 597 736 B1**
(45) Date de publication et mention de la délivrance du brevet: **02.01.1997**
(21) Numéro de dépôt: 93402315.1
(22) Date de dépôt: 22.09.1993
(51) Int. Cl.: E01B 11/50, E01B 29/44

(54) **Procédé de soudage de rails de chemin de fer**
Verfahren zum Schweissen von Eisenbahnschienen
Railway rail welding method

(30) Priorité: 09.11.1992 FR 9213455
(43) Date de publication de la demande: 18.05.1994
(73) Titulaire: TRAVAUX DU SUD-OUEST, 77500 Chelles (FR)
(72) Inventeur: Perron, Loic, F-77400 Lagny Sur Marne (FR)
(74) Mandataire: Loyer, Bertrand

(56) Documents cités:
- DD-A- 225 461
- DE-A- 2 840 916
- FR-A- 2 394 641
- FR-A- 2 612 532

## Description

L'invention concerne le soudage des rails de chemin de fer.

On connaît dans la technique deux catéqories de procédés de soudage des rails bout-à-bout, en vue de constituer des voies selon la technique des longs rails soudés (LRS), à savoir le soudage avec métal d'apport et le soudage sans métal d'apport. Les procédés entrant dans ces deux catégories sont décrits en particulier dans l'ouvrage de Monsieur Jean ALIAS, LA VOIE FERREE (pages 162 à 168, 2^{e} Edition, Paris, EYROLLES 1984).

Pour les soudures devant être exécutées directement en voie, c'est le procédé de soudage avec métal d'apport dit procédé "par soudage aluminothermique" qui retient la faveur des professionnels. En effet, malgré une qualité physique moindre en raison de l'apport de métal, elle seule est considérée comme permettant d'obtenir une qualité géométrique optimale. Or cette exigence de qualité géométrique est essentielle pour les voies sur lesquelles on veut faire circuler des trains rapides tels que le TGV français.

Les soudures électriques sans métal d'apport obtenues par le procédé dit "par étincelage" sont pratiquées dans des ateliers où sont installées des presses importantes permettant de redresser le rail après le soudage pour obtenir la qualité géométrique désirée.

Des essais ont été effectués pour réaliser des soudures électriques directement en voie. Dans ce but, on a conçu des machines constituées par un véhicule automoteur muni à l'une de ses extrémités d'un cadre télescopique portant la tête de soudage.

Les résultats n'ont pas été satisfaisants et l'usage de ces machines est proscrit en pratique pour les voies dont la qualité géométrique constitue un impératif essentiel.

En effet, comme indiqué plus haut, si grâce a soudage électrique la qualité métallique de la soudure est parfaite, la qualité géométrique n'est pas atteinte. Or il n'est pas envisageable pour des raisons techniques et financières d'utiliser en voie les grosses presses redresseuses qui seraient nécessaires pour obtenir la qualité géométrique parfaite.

La présente invention a pour but de permettre d'utiliser pour la pose en voie à l'avancement les machines de soudage sans apport de métal, en obtenant une qualité de soudure équivalente voire supérieure à celle obtenue avec le procédé de soudage par aluminothermie.

Le demandeur a déterminé que la principale raison de l'imperfection géométrique des soudures réalisées en voie à l'aide des machines connues de soudage électrique est le phénomène d'encastrement du rail sous les roues de la machine à proximité de la soudure. En effet, ces machines d'un poids très élevé (40 à 70 tonnes) soumettent le rail à de fortes contraintes verticales et horizontales et provoquent ainsi dans la soudure au moment de sa confection et pendant son refroidissement des contraintes qui modifient sa géométrie.

Ayant pour but de remédier à ces inconvénients et de permettre d'obtenir en voie des soudures géométriquement parfaites par soudage sans apport de métal, le procédé selon l'invention est caractérisé en ce qu'on utilise une machine de soudage munie de moyens lui permettant d'être supportée au-dessus de la voie sans reposer sur les rails pendant l'opération de soudage et au moins pendant le début du refroidissement de la soudure, en ce que préalablement à l'opération de soudage les rails ont été détirefonnés d'un côté et de l'autre du point de la soudure et en ce que sur au moins le côté aval de la soudure les rails sont libres à leur extrémité.

Ainsi, au moment du travail de la tête de soudage, et pendant au moins le début du refroidissement de la soudure, le rail n'est soumis à aucune contrainte autre que celle de la pression de contact entre les abouts des rails (environ 120 tonnes) et la géométrie du rail n'est pas affectée par l'opération de soudage.

En effet, grâce au procédé selon l'invention, la soudure est protégée contre toute force extérieure à un moment particulièrement critique où elle est encore plastique, et donc très facilement déformable, à savoir : le moment du soudage et la période initiale de refroidissement (quelques minutes).

En raison de l'énorme différence de rapport des forces entre la pression de serrage (de l'ordre de 120 tonnes) et la disparition de toute autre contrainte dans le rail due à la libération de celui-ci et à l'absence de pression exercée par la machine de soudage sur le rail à l'endroit de la soudure ou à proximité immédiate de celle-ci, la perfection géométrique de la soudure à sa naissance est préservée.

Non seulement la perfection géométrique de la soudure est préservée, mais encore la structure physique du métal est intégralement conservée sans aucune atteinte comme c'est le cas lorsqu'il est nécessaire d'opérer un redressement des parties chauffées comme cela se fait en usine après une opération de soudage électrique.

De préférence, lorsque le procédé de soudage selon l'invention sera mis en oeuvre sur un chantier dans lequel la continuité des rails en amont, par rapport au sens de déplacement du chantier, ne sera pas interrompue, la longueur sur laquelle les rails seront déséclissés en amont du point de soudure sera au moins comprise entre 10 et 40 mètres, alors qu'en aval du point de soudage les rails seront déséclissés jusqu'à leur extrémité libre qui peut se trouver à une distance très éloignée du point de la soudure (400 mètres et au-delà, la limitation étant de ne pas dépasser une longueur de rail libre telle que son poids risquerait d'affecter la force de pressage de la tête de soudage).

En réalité ce qui importe c'est que de part et d'autre du point de la soudure le rail soit libéré de toute contrainte mécanique dans le sens vertical et dans le sens transversal et qu'il puisse être déplacé longitudinalement sur au moins un côté afin que la consommation de longueur inhérente au soudage électrique sans apport de métal (environ 4cm par soudure) n'induise dans le rail aucune contrainte pertubatrice.

Grâce au procédé selon l'invention, le rail au moment de la soudure et pendant le début du refroidissement, est pour ainsi dire, flottant de part et d'autre du point de la soudure, ce qui évite la formation de ces contraintes pertubatrices.

Dans le cas d'un soudage au cours d'un chantier de pose de voie à l'avancement, la partie des rails en amont du point de la soudure sera donc détirefonnée sur une longueur de 10 à 40 mètres, mais restera liée à la voie précédemment posée et soudée tandis que sur la partie aval les rails seront complètement libres dans toutes les directions puisque non seulement ils ne seront assujettis à la voie par aucun moyen de fixation mais en outre leur extrémité ne sera pas tenue.

Dans le cas d'une utilisation du procédé pour la réfection de soudure sur une voie existante, il faudra détirefonner les rails en amont du point de la soudure sur une longueur d'au moins 10 mètres, pratiquer une coupe à la longueur voulue en aval du point de la soudure et détirefonner les rails sur toute la longueur entre la coupe et le point de la soudure.

Selon un mode de réalisation préférentiel du procédé de l'invention et afin de supprimer les frottements éventuels des rails sur les traverses, inhérents au phénomène de raccourcissement des rails provoqué par la tête de soudage, les rails, après avoir été libérés, sont mis sur des rouleaux de support. Ainsi tout phénomène de traction longitudinale sur le rail en sens contraire de la force de contact appliquée par la tête de soudage est supprimé.

Ces rouleaux peuvent être disposés de part et d'autre du point de la soudure mais ils peuvent être de tous types déjà connus, par exemple des rouleaux individuels montés sur support. Avantageusement, on emploiera de simples fers ronds.

A titre d'exemple d'application non limitatif, le procédé de soudage selon l'invention permet d'optimiser le procédé de pose de voie à l'avancement au moyen d'une poutre de lancement qui pose des éléments de voie préassemblés d'une longueur de 12 à 24 mètres.

Une telle poutre est décrite par exemple dans le brevet français n° 2.612.532 du demandeur.

Selon ce procédé qui peut être envisagé grâce à la présente invention, la poutre pose une série de 16 éléments de voie d'une longueur de 12 à 24 mètres et reste en station sur le dernier élément posé.

Les rails sont ensuite déséclissés sur une longueur d'au moins 10 mètres du côté aval de la voie et sur toute la longueur de la voie du côté amont et la machine de soudage est amenée sur la voie déséclissée.

Cette machine est munie de moyens lui permettant de reposer au sol sans reposer sur les rails.

Par exemple, elle pourra comporter aux deux extrémités de son châssis de patins latéraux hydrauliques lui permettant de se soulever au-dessus de la voie à l'endroit de la soudure.

Elle pourrait également être munie de chenilles ou de pneumatique lui permettant de rouler au-dessus de la voie en prenant appui sur la plate forme de pose.

Elle pourrait encore être munie de moyens d'appui sur les traverses par exemple des vérins rétractables disposés sous son châssis.

Lorsque la machine de soudage a été ramenée sur l'emplacement de soudage et soulevée au-dessus des rails par l'un ou l'autre des moyens ci-dessus décrits, des rouleaux individuels sont disposés entre les traverses sous les rails préalablement déséclissés.

On placera par exemple un rouleau tous les 5 mètres parce que, à cette distance, il n'y a aucun fléchissement du métal dû à son poids.

La tête de soudage est alors mise en action et soude les rails entièrement libérés, flottants sur leurs rouleaux.

Après avoir réalisé la première soudure, la machine sera reposée sur les rails, amenée jusqu'au point de la soudure suivante et remise en position soulevée au-dessus des rails, et ainsi de suite.

Chaque soudure provoque en moyenne un raccourcissement de 4 cm de la longueur soudée.

De préférence, la machine de soudage soudera vers l'arrière, c'est-à-dire que la tête de soudage se trouvera vers l'arrière par rapport à la direction de déplacement de la machine vers l'avant de la voie posée par la poutre. Ainsi dès que l'opération de soudage sera terminée, la machine pourra être déplacée vers le point de soudage suivant, sans attendre le refroidissement complet de la soudure qui vient d'être effectuée puisqu'elle n'aura pas à rouler dessus.

Lorsque la machine aura soudé les deux files de rails des 15 premiers éléments posés par la poutre elle repartira vers le chantier de base ou vers une dérivation d'attente pour permettre à la poutre de lancement, stationnée sur le 16^{ème} élément, de repartir au chantier de base rechercher une nouvelle charge de 16 longueurs préassemblées.

En raison du raccourcissement de la voie, il y aura entre la 15ème et la 16^{ème} longueur un vide d'environ 60 cm qui sera comblé par un coupon provisoire pour permettre le retour de la poutre. Après passage du coupon, la poutre sera utilisée pour enlever le coupon et ramener le 16^{ème} élément au contact de la voie déjà soudée.

Cette séquence pourra être répétée indéfiniment sur toute la longueur du chantier de pose.

Le principe de la libération totale des rails, au moment de la soudure par la tête de soudage, qui est à la base de la présente invention peut également être appliqué avantageusement au soudage des rails en usine avec l'avantage de supprimer l'opération de redressage à la presse qui, en usine, suit le passage de la file de rails dans la machine à souder, opération qui entraîne une modification de la structure physique du métal.

En effet, dans les procédés mis en oeuvre actuellement dans les usines de soudage, les longueurs de rails sont approvisionnées en files qui sont poussées en continu vers la machine de soudage puis tractées à l'état encore chaud donc plastique vers un poste de pressage destiné à rectifier le profil du rail.

L'invention vise donc également un procédé de soudage de rails en chantier fixe (usine) sans apport de métal, caractérisé en ce que les rails sont placés en files sur des rouleaux et en ce que c'est la machine de soudage qui circule au-dessus des files de rails à souder sans exercer sur lesdits rails aucun appui ou contrainte autre que ceux de la tête de soudage elle-même.

On comprend qu'avec ce procédé selon l'invention, on fait le contraire de ce qui se pratique actuellement dans les usines de soudage de rails. En effet, dans ces dernières, ce sont les rails qui sont entraînés (poussés puis tractés) pour passer dans des postes fixes de soudure et de redressage, alors que selon l'invention, c'est la machine de soudage qui circule le long de la file de rails à souder, qui eux restent stationnaires.

## Revendications

1. Procédé de soudage de rails en voie à l'aide d'une machine de soudage électrique sans apport de métal, caractérisé en ce que l'on utilise une machine munie de moyens lui permettant d'être supportée au-dessus des rails pendant l'opération de soudage et au moins pendant le début du refroidissement de la soudure, en ce que préalablement à l'opération de soudage les rails ont été détirefonnés d'un côté et de l'autre du point de la soudure et en ce que sur au moins le côté aval de la soudure les rails sont libres à leur extrémité de telle sorte que la machine de soudage circule au-dessus de la file de rails devant être soudée et rendus flottants, sans exercer sur eux en cours de soudage aucun appui ou contrainte autre que ceux provoqués par la tête de soudage elle-même.

2. Procédé de soudage selon la revendication 1, caractérisé en ce que du côté amont du point de la soudure les rails sont détirefonnés sur une longueur d'au moins 10 à 40 mètres, tandis que du côté aval les rails sont détirefonnés sur toute la longueur entre le point de la soudure et leur extrémité libre.

3. Procédé de soudage selon la revendication 1 ou 2, caractérisé en ce qu'après libération et avant soudage, les rails sont placés sur des rouleaux.

4. Procédé de pose de voie au moyen d'une poutre de lancement posant à l'avancement des éléments de voie d'une longueur de 12 à 24 mètres, caractérisé en ce qu'après le passage de la poutre on amène sur la voie une machine de soudage sans apport de métal, ladite machine étant munie de moyens lui permettant d'être supportée au-dessus la voie sans reposer sur les rails, en ce que au point de soudage, on met en fonctionnement lesdits moyens de support, en ce que l'on déséclisse les rails du côté amont du point de soudage sur une longueur au moins comprise entre 10 et 40 mètres et sur toute la longueur du rail du côté aval et en ce qu'on met en fonctionnement la tête de soudage.

5. Procédé de pose de voie selon la revendication 4, caractérisé en ce qu'après déséclissage, les rails sont placés sur des rouleaux.

6. Procédé de pose de voie selon la revendication 4 ou 5, caractérisé en ce que la machine soude à l'arrière par rapport au sens d'avancement du chantier.

7. Procédé de soudage de rails en chantier fixe sans apport de métal, caractérisé en ce que les rails sont placés en file sur des rouleaux et en ce qu'une machine de soudage circule au-dessus des files de rails à souder sans exercer sur lesdits rails aucun appui ou contrainte autre que ceux de la tête de soudage elle-même.

## Patentansprüche

1. Verfahren zum Schweißen von Schienen auf der Strecke mittels einer elektrischen Schweißmaschine ohne Metallzuführung, **dadurch gekennzeichnet**, daß man eine Maschine einsetzt, die mit Mitteln versehen ist, die es gestatten, daß sie während des Schweißvorganges und zumindest während des Beginns der Abkühlung der Schweißnaht oberhalb der Schienen gehalten wird, daß vor Ausführung der Schweißung an den Schienen beidseits der Schweißstelle die Schwellenschrauben gelöst werden, und daß auf wenigstens der stromabwärts der Schweißstelle liegenden Seite die Schienen an ihren Enden derart frei sind, daß die Schweißmaschine oberhalb der Reihe der zu verschweißenden und losen Schienen laufen kann, ohne auf diese beim Schweißen irgendwelche anderen Abstützungen oder Belastungen als die, die vom Schweißkopf selbst hervorgerufen werden, auszuüben.

2. Schweißverfahren nach Anspruch 1, dadurch gekennzeichnet, daß die Schwellenschrauben der Schienen auf der stromaufwärts der Schweißstelle liegenden Seite über eine Länge von wengistens 10 m bis 40 m gelöst werden, während die Schwellenschrauben der Schienen auf der stromabwärts gelegenen Seite auf der gesamten Länge zwischen der Schweißstelle und dem freien Ende der Schienen gelöst werden.

3. Schweißverfahren nach Anspruch 1 oder 2, dadurch gekennzeichnet, daß die Schienen nach ihrem Lösen und vor dem Verschweißen auf Rollen angeordnet werden.

4. Verfahren zum Verlegen von Schienen mittels eines Vorschiebeträgers, der beim Vorrücken Gleiselemente einer Länge von 12 m bis 24 m absetzt, dadurch gekennzeichnet, daß man nach dem Durchgang des Trägers auf der Strecke eine Maschine zum Schweißen ohne Metallzuführung herbeiführt, die mit Mitteln ausgerüstet ist, welche es gestatten, daß sie oberhalb des Gleises gehalten wird, ohne auf den Schienen zu stehen, daß man an der Schweißstelle besagte Haltemittel in Funktion setzt, daß man die Schienen auf der Seite stromaufwärts des Schweißpunktes über eine Länge von mindestens 10 m bis 40 m sowie auf der Seite stromabwärts der Schweißstelle auf der gesamten Schienenlänge ablascht, und daß man den Schweißkopf in Betrieb setzt.

5. Verfahren zum Verlegen von Schienen nach Anspruch 4, dadurch gekennzeichnet, daß die Schienen nach dem Ablaschen auf Rollen angeordnet werden.

6. Verfahren zum Verlegen von Schienen nach Anspruch 4 oder 5, dadurch gekennzeichnet, daß die Maschine relativ zur Bewegungsrichtung der Baustelle hinten schweißt.

7. Verfahren zum Schweißen von Schienen an einer ortsunveränderlichen Baustelle ohne Zugabe von Metall, dadurch gekennzeichnet, daß die Schienen in Reihe auf Rollen angeordnet werden und daß eine Schweißmaschine oberhalb der Reihen der zu schweißenden Schienen läuft, ohne auf diese Schienen irgendwelche Drücke oder Spannungen außer denen auszuüben, die vom Schweißkopf selbst stammen.

## Claims

1. A method for welding rails on the track using an electric welding machine without a filler metal, characterised in that a machine is used which is provided with means which make it possible for it to be supported above the rails during the welding operation and at least during the start of cooling of the weld, in that prior to the welding operation the sleeper screws of the rails have been unscrewed on either side of the welding point and in that the rails are free at their ends on at least the downstream side of the weld, such that the welding machine travels over the line of rails which are to be welded and which have been rendered floating, without exerting thereon during welding any pressure or stress other than that produced by the welding head itself.

2. A welding method according to Claim 1, characterised in that on the upstream side of the point of the weld the sleeper screws of the rails are unscrewed over a length of at least 10 to 40 metres, whereas on the downstream side the sleeper screws of the rails are unscrewed over the entire length between the point of the weld and their free ends.

3. A welding method according to Claim 1 or 2, characterised in that once the rails have been freed and before they are welded they are placed on rollers.

4. A method for laying track by means of a laying crane which advance-lays track elements of a length of 12 to 24 metres, characterised in that once the crane has passed a machine for welding without a filler metal is brought onto the track, said machine being provided with means which make it possible for it to be supported over the track without resting on the rails, in that, at the welding point, said supporting means are actuated, in that the fishplates are removed from the rails over a length of at least 10 to 40 metres on the upstream side of the welding point and over the entire length of the rail on the downstream side and that the welding head is actuated.

5. A method for laying track according to Claim 4, characterised in that once the fishplates have been removed the rails are placed on rollers.

6. A method for laying track according to Claim 4 or 5, characterised in that the machine welds at the back with respect to the direction of advance of the site.

7. A method for welding rails in a stationary site without a filler metal, characterised in that the rails are placed in lines on rollers, and that a welding machine travels over the lines of rails to be welded without exerting on said rails any pressure or stress other than that of the welding head itself.
